# EUROPÄISCHE PATENTSCHRIFT

(11) **EP 2 906 634 B1**
(45) Veröffentlichungstag und Bekanntmachung des Hinweises auf die Patenterteilung: **14.09.2016**
(21) Anmeldenummer: 13774201.1
(22) Anmeldetag: 10.10.2013
(51) Int. Cl.: C08L 77/00, C08L 77/02, C08L 51/06, C08L 33/08, C08L 33/10, C08K 7/14, C08L 23/08

(54) **MISCHUNGEN FÜR POLYAMID-BASIERTE FORMMASSEN**
MIXTURES FOR POLYAMIDE BASED MOULDING MATERIAL
MÉLANGES POUR MASSES DE FORMAGE À BASE DE POLYAMIDE

(30) Priorität: 10.10.2012 EP 12187881
(43) Veröffentlichungstag der Anmeldung: 19.08.2015
(73) Patentinhaber: LANXESS Deutschland GmbH, 50569 Köln (DE)
(72) Erfinder: MARGRAF, Günter, 41539 Dormagen (DE); JOACHIMI, Detlev, 47800 Krefeld (DE)
(86) Internationale Anmeldenummer: PCT/EP2013/071154
(87) Internationale Veröffentlichungsnummer: WO 2014/057031

(56) Entgegenhaltungen:
- WO-A1-2005/121249
- JP-A- 2005 298 578

## Beschreibung

Diese Erfindung betrifft Mischungen für Polyamid-basierte Formmassen sowie daraus mittels Spritzguss herzustellende Erzeugnisse mit hoher Schlagzähigkeit und hoher Bruchdehnung.

Blends aus Polyamiden und Elastomeren zeigen eine erhöhte Schlagzähigkeit im spritzfrischen Zustand und bei tiefen Temperaturen. Um eine verbesserte Schlagzähigkeit zu erzielen, ist die chemische Ankoppelung des Elastomers an die Polyamidmatrix durch funktionelle Gruppen wie Carbonsäuregruppen, Carbonsäureestergruppen oder Anhydridgruppen und die Bildung einer feinteiligen und gleichmäßigen Elastomerverteilung erforderlich. Daher werden Elastomere, insbesondere auf Basis von Polyolefinen sowie Butadien- und Acrylatpfropfkautschuken, mit Carbonsäuregruppen, Carbonsäureestergruppen oder Anhydridgruppen verwendet (Nylon Plastics Handbook, Hanser-Verlag München 1995, Seiten 415-422; Kunststoff-Handbuch 3/4, Polyamide, Carl Hanser Verlag, München 1998, Seiten 16, 133-138).

US-A 4174358 beschreibt schlagzähe Polyamidzusammensetzungen, die neben einer Polyamidmatrix mindestens eine zweite Phase aufweisen, die Teilchen im Bereich von 0,01 bis 10 µm aus mindestens einem spezifizierten Polymer enthält. Beispiele für diese spezifizierten Polymere in US-A 4174358 sind Maleinsäureanhydrid-funktionalisierte Ethylen-Propylen-Copolymere.

Die Verwendung von Maleinsäureanhydrid-funktionalisierten Ethylen-Propylen-Copolymeren zur Schlagzähmodifizierung von Polyamiden stellt eine etablierte Methode dar (Nylon Plastics Handbook, Hanser-Verlag München 1995, Seiten 415-419). Maleinsäureanhydrid-funktionalisierte Ethylen-Propylen-Copolymere zur Schlagzähmodifizierung von Polyamid sind kommerziell verfügbar, unter anderem von ExxonMobil Chemical Europe (Exxelor^{®} VA1801) und Lanxess Deutschland GmbH (Keltan^{®} 2708R).

Neben der Verwendung von Maleinsäureanhydrid gepfropften Ethylen-Propylen-Copolymeren entspricht auch die Verwendung von Maleinsäureanhydrid-funktionalisierten Ethylen-(1-Octen)-Copolymeren (US-A 5705565) zur Schlagzähmodifizierung von Polyamiden sowie die Verwendung von Mischungen aus Ethylen-α-Olefin-Copolymeren und Maleinsäureanhydrid-funktionalisierten Ethylen-α-Olefin-Copolymeren (WO99/60062 A1) zur Schlagzähmodifizierung von Polyestern dem Stand der Technik.

Copolymerisate von Olefinen mit Methacrylsäureestern oder Acrylsäureestern können im Spritzgießprozeß, d.h. bei Scherraten zwischen 1000 und 10000 s⁻¹, als Fließverbesserer in Polyamid-basierten Formmassen wirken. So wird in WO2005/121249 A1 beschrieben, dass Mischungen aus mindestens einem teilkristallinen thermoplastischen Polyamid mit Copolymerisaten von Olefinen mit Methacrylsäureestern oder Acrylsäureestern aliphatischer Alkohole, die einen Schmelzindex (MFI) von 100 g/10 min nicht unterschreiten, im Spritzgießprozess zur Erniedrigung der Schmelzviskosität der daraus hergestellten Formmassen führen.

WO2011/144716 A1 beschreibt Stoffgemische enthaltend A) 70 bis 98,99 Gew.-Teile Polyamid, B) 1 bis 10 Gew.-Teile eines Copolymerisats bestehend aus mindestens einem Olefin, bevorzugt α-Olefin und mindestens einem Methacrylsäureester oder Acrylsäureester eines aliphatischen Alkohols wobei der MFI (Melt Flow Index) des Copolymerisats B) größer 10 g / 10 min ist und der MFI bei 190 °C und einer Belastung von 2,16 kg bestimmt bzw. gemessen wird, C) 0,01 bis 10 Gew.-Teile eines kettenverlängernd wirkenden Additivs der Reihe epoxidierter Fettsäureester des Glycerins oder modifizierter Bisphenol A-Epoxidharze, und D) 0,001 bis 40 Gew.-Teile eines Schlagzähmodifikators, für die Verwendung in Extrusion und Extrusionsblasformverfahren, die eine Erhöhung der Viskosität im Bereich niedriger Scherraten und erhöhte Schmelzefestigkeiten bei der Extrusion zeigen.

Schließlich beschreibt JP 2005-298578 A den Einsatz von Ethylen und C₃-C₁₂-αOlefin Copolymeren zur Verbesserung der Schlagzähigkeit Polyamid-basierter Erzeugnisse.

Die Aufgabe der vorliegenden Erfindung bestand darin, Polyamid-Formmassen bereitzustellen, aus denen Erzeugnisse hergestellt werden können, die gegenüber dem Stand der Technik höheren Schlagzähigkeit und höheren Bruchdehnung aufweisen. Die Schlagzähigkeit im Sinne der vorliegenden Erfindung wird ermittelt gemäß Charpy IS0179 1eU an spritzgegossenen Probekörpern 80 mm - 10 mm 4 mm in spritzfrischem Zustand. Die Bruchdehnung im Sinne der vorliegenden Erfindung wird ermittelt gemäß IS0527 an spritzgegossenen Probekörpern 170 mm 10 mg 4 mm in spritzfrischem Zustand.

Eine hohe Schlagzähigkeit im Sinne der vorliegenden Erfindung bedeutet eine Schlagzähigkeit gemäß Charpy ISO179 1 eU von mindestens 115 kJ/m², bevorzugt mindestens 116 kJ/m², besonders bevorzugt von mindestens 117 kJ/m² und wird im Rahmen der vorliegenden Erfindung an spritzgegossenen Erzeugnissen in spritzfrischem Zustand bei. 23 °C bestimmt.

Eine hohe Bruchdehnung im Sinne der vorliegenden Erfindung bedeutet eine Bruchdehnung gemäß ISO527 von mindestens 7%, bevorzugt mindestens 7,2 %, besonders bevorzugt mindestens 7,3% und wird im Rahmen der vorliegenden Erfindung an spritzgegossenen Erzeugnissen in spritzfrischem Zustand bei 23 °C bestimmt.

Spritzfrischer Zustand im Sinne der vorliegenden Erfindung bedeutet, dass im unmittelbaren Anschluss an das Spritzgießen die Probekörper für mindestens 16 Stunden und bis zur Durchführung des Zugversuches gemäß ISO527 bzw. der Messung der Schlagzähigkeit gemäß Charpy ISO179 1 eU bei 23 ± 2 °C und einer relativen Luftfeuchte von 50 ± 10 % gelagert werden. Bezüglich des weiteren Vorgehens sei auf ISO527 verwiesen.

Erfindungsgemäß umfasst der Begriff Formmassen die für den Spritzguss einzusetzenden Polyamid-basierten Granulate, enthaltend die erfindungsgemäßen Mischungen. Die im Rahmen der vorliegenden Erfindung zu messenden Eigenschaften wie Bruchdehnung und Schlagzähigkeit lassen sich daher bereits auch an den Polyamid-basierten Granulaten als eine Form von Erzeugnissen, messen bzw. bestimmen.

Es wurde nun überraschend gefunden, dass eine Polyamid-Formmasse enthaltend Mischungen aus
A) 28 bis 84,5 Gew.-%, bevorzugt 36 bis 81,5 Gew.-%, wenigstens eines Polyamids,
B) 10 bis 50 Gew.-%, bevorzugt 10 bis 45 Gew.-%, besonders bevorzugt 15 bis 40 Gew.-% wenigstens einer Form von Glasfasern,
C) 5 bis 17 Gew.-%, bevorzugt 8 bis 15 Gew.-%, wenigstens eines mit Maleinsäureanhydrid gepfropften Ethylen-Butylen-Copolymers, und
D) 0,5 bis 5 Gew.-%, bevorzugt 0,5 bis 4 Gew.-%, wenigstens eines Copolymerisats bestehend aus Wiederholungseinheiten von mindestens einem Olefin, bevorzugt α-Olefin und mindestens einem Methacrylsäureester oder Acrylsäureester eines aliphatischen Alkohols, wobei der MFI (Melt Flow Index) des Copolymerisats D) 150 g/10 min nicht unterschreitet und 600 g/10 min nicht überschreitet und der MFI bei 190 °C und einer Belastung von 2,16 kg bestimmt bzw. gemessen wird, wobei die Summe aller Gewichtsprozente stets 100 ergibt, es ermöglicht, Erzeugnisse herzustellen, die gegenüber dem Stand der Technik sowohl eine hohe Schlagzähigkeit als auch höhere Werte für die Bruchdehnung aufweisen.

Die erfindungsgemäß einzusetzenden Mischungen machen 95 bis 100 Gew.-%, bevorzugt zu 98 bis 100 Gew-%, besonders bevorzugt zu 99 bis 100 Gew.-% der erfindungsgemäßen bzw. erfindungsgemäß einzusetzenden Polyamid-Formmassen und somit auch der daraus herzustellenden Erzeugnisse aus. Die restlichen Bestandteile können sonstige Additive sein, wie sie der Fachmann aus dem Stand der Technik, siehe Plastics Additives Handbook, 5th Edition, Hanser-Verlag, München, 2001, Seiten 80-84, her kennt und wie sie im Rahmen der vorliegenden Erfindung als Komponente E) beschrieben werden.

Zur Klarstellung sei angemerkt, dass vom Rahmen der Erfindung alle nachfolgend aufgeführten, allgemeinen oder in Vorzugsbereichen genannten Definitionen und Parameter in beliebigen Kombinationen umfasst sind.

Gegenstand der vorliegenden Erfindung sind deshalb Mischungen enthaltend
A) 28 bis 84,5 Gew.-%, bevorzugt 36 bis 81,5 Gew.-%, wenigstens eines Polyamids,
B) 10 bis 50 Gew.-%, bevorzugt 10 bis 45 Gew.-%, besonders bevorzugt 15 bis 40 Gew.-% wenigstens einer Form von Glasfasern,
C) 5 bis 17 Gew.-%, bevorzugt 8 bis 15 Gew.-%, wenigstens eines mit Maleinsäureanhydrid gepfropften Ethylen-Butylen-Copolymers, und
D) 0,5 bis 5 Gew.-%, bevorzugt 0,5 bis 4 Gew.-% wenigstens eines Copolymerisats bestehend aus Wiederholungseinheiten von mindestens einem Olefin, bevorzugt α-Olefin, und mindestens einem Methacrylsäureester oder Acrylsäureester eines aliphatischen Alkohols, wobei der MFI (Melt Flow Index) des Copolymerisats D) 150 g/10 min nicht unterschreitet und 600 g/10 min nicht überschreitet und der MFI bei 190 °C und einer Belastung von 2,16 kg bestimmt bzw. gemessen wird, wobei die Summe aller Gewichtsprozente stets 100 ergibt.

Gegenstand der Erfindung sind zudem für den Spritzguß vorgesehene Polyamid-Formmassen enthaltend die erfindungsgemäßen Mischungen, die 95 bis 100 Gew.-%, bevorzugt 98 bis 100 Gew-%, besonders bevorzugt 99 bis 100 Gew.-% der erfindungsgemäßen bzw. erfindungsgemäß zur Herstellung von Erzeugnissen einzusetzenden Polyamid-Formmassen ausmachen. In einer bevorzugten Ausführungsform der vorliegenden Erfindung enthalten die erfindungsgemäßen Mischungen neben den Komponenten A), B), C) und D) noch zusätzlich 0,01 bis 5 Gew.-% sonstiger Additive E), wobei die Mengen von einer oder mehrerer der Komponenten A), B), C) und D) so reduziert werden, dass die Summe aller Gewichtsprozente in den Mischungen stets 100 ergibt.

Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden. Die technisch relevanten Verfahren zur Herstellung der in den erfindungsgemäßen Mischungen bzw. den erfindungsgemäßen Polyamid-basierten Formmassen einzusetzenden Polyamide verlaufen bevorzugt über die Polykondensation in der Schmelze. Erfindungsgemäß wird hierunter auch die hydrolytische Polymerisation von Lactamen als Polykondensation verstanden. Die Herstellung von Polyamiden durch thermische Polykondensation ist dem Fachmann bekannt, siehe auch Nylon Plastics Handbook, Hanser-Verlag München 1995, Seiten 17-27 und Kunststoff-Handbuch 3/4, Polyamide, Carl Hanser Verlag, München 1998, Seiten 22-36.

Erfindungsgemäß bevorzugt einzusetzende Polyamide sind teilkristalline, aliphathische Polyamide. Im Gegensatz zu amorphen Thermoplasten bilden die Makromoleküle der teilkristallinen Thermoplaste, zu denen die erfindungsgemäß einzusetzenden Polyamide gerechnet werden, nur in manchen Bereichen eine kristalline Struktur aus. Kunststoffe mit teilkristalliner Struktur sind meist opak, da die kristallinen Bereiche das Licht streuen. Aufgrund der kristallinen Bereiche sind die Werkstoffe sehr zäh (starke, zwischenmolekulare Kräfte) und zeigen auch über der Glasübergangstemperatur eine mechanische Belastbarkeit. Grundsätzlich lassen sich die teilkristallinen Thermoplaste über folgende Eigenschaften charakterisieren: sie sind transluzent oder opak, sie zeigen hohe Ermüdungsfestigkeit, sie zeigen eher zähes Verhalten, sie besitzen eine gute Chemikalienbeständigkeit, sie zeigen gutes Gleitverhalten, sie sind verschleißfest, sie haben einen Glasübergang und weisen einen Kristallinitätsgrad auf. Aufgrund des zähharten Verhaltens eignen sich teilkristalline Kunststoffe besonders für mechanisch beanspruchte Bauteile und Gleitwerkstoffe.

Erfindungsgemäß bevorzugt sind Polyamide die ausgehend von Diaminen und Dicarbonsäuren und/oder Lactamen mit wenigstens 5 Ringgliedern oder entsprechenden Aminosäuren hergestellt werden können.Als Edukte zur Herstellung der erfindungsgemäß einzusetzenden Polyamide kommen bevorzugt aliphatische und/oder aromatische Dicarbonsäuren, besonders bevorzugt Adipinsäure, 2,2,4-Trimethyladipinsäure, 2,4,4-Trimethyladipinsäure, Azelainsäure, Sebazinsäure, Isophthalsäure, Terephthalsäure, aliphatische und/oder aromatische Diamine, besonders bevorzugt Tetramethylendiamin, Pentamethylendiamin, Hexamethylendiamin, 1,9-Nonandiamin, 2,2,4- und 2,4,4-Trimethylhexamethylendiamin, die Isomeren Diaminodicyclohexylmethan, Diaminodicyclohexylpropan, Bis-aminomethyl-cyclohexan, Phenylendiamin, Xylylendiamin, Aminocarbonsäuren, insbesondere Aminocapronsäure, oder die entsprechenden Lactame in Betracht. Copolyamide aus mehreren der genannten Monomeren sind eingeschlossen.

Besonders bevorzugt sind teilkristalline Polyamide der Reihe PA-6, PA-66, PA619, PA612, PA10, PA810, PA106, PA1010, PA11, PA1011, PA1012, PA1210, PA1212, PA814, PA1014, PA618, PA512, PA613, PA813, PA914, PA1015, PA11, PA12. Die Kennzeichnung der Polyamide entspricht einer internationalen Norm worin die erste(n) Ziffer(n) die C-Atomzahl des Ausgangsdiamins und die letzte(n) Ziffer(n) die C-Atomzahl der Dicarbonsäure angeben. Wird nur eine Zahl genannt so bedeutet dies, dass von einer α,ω-Aminocarbonsäure bzw. von dem davon abgeleiteten Lactam ausgegangen worden ist. Im Übrigen sei verwiesen auf H.Domininghaus, Die Kunststoffe und ihre Eigenschaften, Seite 272 ff., VDI-Verlag, 1976.

Erfindungsgemäß einzusetzende teilkristalline Polyamide besitzen eine Schmelzenthalpie im Bereich von mehr als 25 J/g, gemessen mit DSC-Methode gemäß ISO 11357 beim 2. Aufheizen und Integration des Schmelzpeaks.
Erfindungsgemäß bevorzugt sind aber auch semikristalline Polyamide mit einer Schmelzenthalpie im Bereich von etwa 4,2 bis 25 J/g, gemessen mit der DSC-Methode gemäß ISO 11357 beim 2. Aufheizen und Integration des Schmelzpeaks. Bevorzugte semikristalline Polyamide sind das Polyamid aus 1,10-Decandisäure oder 12-Dodecandisäure und 4,4'-Diaminodicyclohexylmethan (PA PACM10 und PA PACM12), ausgehend von einem 4,4'- Diaminodicyclohexylmethan mit einem trans,trans-Isomerenanteil von 35 bis 65%, Copolymere auf Basis der oben genannten teilkristallinen Polyamide mit Caprolactam als Comonomer sowie Blends aus den oben genannten teilkristallinen Polyamiden und einem damit verträglichen amorphen Polyamid, wobei letztere eine Schmelzenthalpie im Bereich von weniger als 4,2 J/g, gemessen mit DSC-Methode gemäß ISO 11357 beim 2. Aufheizen und Integration des Schmelzpeaks, aufweisen. (DSC = dynamische Differenzkalorimetrie, siehe http://de.wikipedia.org/wiki/Dynamische_Differenzkalorimetrie).

Insbesondere bevorzugt sind teilkristallines PA6, teilkristallines PA66 und statistische, teilkristalline, aliphathische Copolyamide PA 6/66, polymerisiert aus ε-Caprolactam und Hexamethylendiaminadipat.

ε-Caprolactam (CAS-Nummer 105-60-2) wird bevorzugt unter anderem zur Herstellung von Polyamid verwendet. Aus Cyclohexanon wird durch Umsetzung mit dem Hydrogensulfat oder dem Hydrochlorid des Hydroxylamins zunächst Cyclohexanonoxim hergestellt. Dieses wird durch eine Beckmann-Umlagerung in ε-Caprolactam umgewandelt.

Hexamethylendiaminadipat (CAS-Nummer 3323-53-3) ist das Reaktionsprodukt von Adipinsäure und Hexamethylendiamin. Es wird unter anderem auch als Zwischenprodukt bei der Herstellung von Polyamid 66 verwendet. Der für das Hexamethylendiaminadipat verwendete Trivialname AH-Salz leitet sich von den Anfangsbuchstaben der Ausgangssubstanzen ab.

Selbstverständlich können auch Mischungen der aufgelisteten Polyamide eingesetzt werden, wobei das Mischungsverhältnis beliebig ist.

Es können außerdem Anteile von rezyklierten Polyamid-Formmassen und/oder Faser rezyklaten enthalten sein.

Erfindungsgemäß ganz besonders bevorzugt einzusetzende Polyamide oder Copolyamide weisen eine Viskositätszahl VN gemäß DIN EN ISO 307 in Schwefelsäure von 125 bis 160 ml/g, besonders bevorzugt von 130 bis 155 ml/g, ganz besonders bevorzugt von 140 bis 150 ml/g auf.

Die Viskositätszahl VN eines Polymeres ist die unter Normbedingungen ermittelte relative Erhöhung der Viskosität eines Lösungsmittels durch 0,1-1,0 g/100 ml gelöstes Polymer, geteilt durch die Konzentration in g/100ml. In diesem Zusammenhang häufig angewandte Normen sind DIN 53727, ISO 307, ASTM D 2117, wobei im Rahmen der vorliegenden Erfindung die VN nach ISO 307 bestimmt wurde. Die Bestimmung der Viskositätszahl VN erfolgt erfindungsgemäß in handelsüblicher Schwefelsäure 95% bis 98% und durch Einstellung auf 96%. Bei diesem Verfahren wird die Lösungsviskosität des Polyamids als Viskositätszahl in Schwefelsäure im Ubbelohde-Viskosimeter bestimmt.

Als Komponente B) werden 10 bis 50 Gew.-%, bevorzugt 10 bis 45 Gew.-%, besonders bevorzugt 15 bis 40 Gew.-% wenigstens einer Form von Glasfasern eingesetzt.

Die Form der erfindungsgemäß einzusetzenden Glasfaser wird bevorzugt ausgewählt aus der Gruppe der E-Glasfasern, A-Glasfasern, C-Glasfasern, D-Glasfasern, S-Glasfasern und / oder R-Glasfasern. Erfindungsgemäß sind E-Glasfasern besonders bevorzugt.

Die erfindungsgemäß als Komponente B) einzusetzenden Glasfasern weisen bevorzugt eine Querschnittsfläche und einen Filament-Durchmesser von 6 - 11 µm, besonders bevorzugt einen Filament-Durchmesser von 9 - 11 µm, auf.

Die erfindungsgemäß einzusetzenden Glasfasern weisen bevorzugt eine kreisförmige oder ovale Querschnittsfläche auf, besonders bevorzugt weisen sie eine kreisförmige Querschnittsfläche auf.

Die als Komponente B) einzusetzenden Glasfasern können in einer alternativen Ausführungsform von flacher Gestalt und nicht-kreisförmiger Querschnittsfläche sein, deren Hauptquerschnittsachse eine Breite im Bereich von 6 - 40 µm und deren Nebenquerschnittsachse eine Breite im Bereich von 3 - 20 µm aufweist.

In einer weiteren bevorzugten Ausführungsform können sowohl kreisförmige oder ovale als auch nicht kreisförmige Glasfasern als Komponente B) nebeneinander eingesetzt werden.

Die als Komponente B) einzusetzenden Glasfasern können als Endlosfasern oder als geschnittene oder gemahlene Glasfasern der erfindungsgemäßen Formmasse zugesetzt werden. Bevorzugt sind die Glasfasern mit einem geeigneten Schlichtesystem ausgerüstet. Für Glasfasern geeignete Schlichtesysteme enthalten bevorzugt folgende Komponenten:
- Haftvermittler, besonders bevorzugt auf Silanbasis
- Filmbildner
- Vernetzer
- Gleitmittel

Bevorzugt werden diese Schlichtesysteme in Form wässriger Polymer-Dispersionen auf die Glasfaser aufgetragen.

Besonders bevorzugt werden diese Schlichtesysteme als Haftvermittler für die Komponente B) in Bezug auf die Komponente A) eingesetzt. Ganz besonders bevorzugt wird ein Schlichtesystem auf Silanbasis eingesetzt.

Besonders bevorzugt sind Haftvermittler auf Silanbasis der allgemeinen Formel (I)

(X-(CH₂)_{q})ₖSi-(O-CᵣH₂ᵣ₊₁)₄₋ₖ (I)

worin
- X: für NH₂-, HO- oder 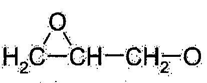 steht,
- q: für eine ganze Zahl von 2 bis 10, bevorzugt 3 bis 4 steht,
- r: für eine ganze Zahl von 1 bis 5, bevorzugt 1 bis 2 steht und
- k: für eine ganze Zahl von 1 bis 3, bevorzugt 1 steht.

Ganz besonders bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Gesamtmenge der Schlichte-Trockenmasse, die als Haftvermittler auf die Glasfaser aufgetragen wird, beträgt bevorzugt 0,05 bis 2 Gew.-%, besonders bevorzugt 0,25 bis 1,5 Gew.-% und ganz besonders bevorzugt 0,5 bis 1 Gew.-% bezogen auf die Glasfaser.

Als Komponente C) werden 5 bis 17 Gew.-%, bevorzugt 8 bis 15 Gew.-%, wenigstens eines mit Maleinsäureanhydrid gepfropften Ethylen-Butylen-Copolymers eingesetzt, wobei der Maleinsäureanhydrid-Gehalt des funktionalisierten Copolymers bevorzugt 0,1 bis 10 Gew.-%, besonders bevorzugt 0,1 bis 5 Gew.-%, ganz besonders bevorzugt 0,1 bis 2 Gew.-% beträgt und die Wiederholungseinheiten basierend auf den Monomeren Ethylen und Butylen in einem Verhältnis der Gew.% von 4:6 bis 3:7 im funktionalisierten Copolymer vorliegen.

Die Dichte des als Komponente C) einzusetzenden funktionalisierten Copolymers beträgt bevorzugt 0,80-0,95 g/cm³, besonders bevorzugt 0,85-0,90 g/cm³. Die Dichte eines Stoffes ist der Quotient aus der Masse und dem Volumen; die Bestimmung der Dichte erfolgt nach DIN 53 479.

Der Volumen-Fließindex MVI des als Komponente C) einzusetzenden funktionalisierten Copolymers bei 190 °C / 2,16 kg / 5 min beträgt bevorzugt 1-50 cm³/10min, besonders bevorzugt 2-20 cm³/10min. Bezüglich des MVI, seiner Definition und seiner Bestimmung sei auf B. Carlowitz, Tabellarische Übersicht über die Prüfung von Kunststoffen, 6. Auflage, Giesel Verlag für Publizität, 1992 verwiesen. Demnach ist der MVI das Volumen einer Probe, das in einer bestimmten Zeit unter festgelegten Bedingungen durch eine Düse gedrückt wird. Dies erfolgt für Thermoplasten nach DIN 53 735 (1988) bzw. ISO 1133-1981. Der MVI dient zur Charakterisierung des Fließverhaltens (Formmassenprüfung) eines Thermoplasten bei bestimmten Druck- und Temperaturbedingungen. Er ist ein Maß für die Viskosität einer Kunststoffschmelze.

Der MVI wird im Rahmen der vorliegenden Erfindung nach ISO 1133 mittels eines Kapillarrheometers ermittelt, wobei das Material (Granulat oder Pulver) in einem beheizbaren Zylinder aufgeschmolzen und unter einem durch die Auflagelast entstehenden Druck durch eine definierte Düse bzw. Kapillare gedrückt wird. Ermittelt wird das austretende Volumen der Polymerschmelze, des sogenannten Extrudats als Funktion der Zeit. Die Einheit für den MVI ist cm³/10min.

Neben dem Volumen-Fließindex MVI beschreibt ISO 1133-1981 auch den Schmelzindex MFI. Bezüglich des MFI, seiner Definition und seiner Bestimmung sei auf B. Carlowitz, Tabellarische Übersicht über die Prüfung von Kunststoffen, 6. Auflage, Giesel Verlag für Publizität, 1992 verwiesen. Demnach ist der MFI die Masse einer Probe, die in einer bestimmten Zeit unter festgelegten Bedingungen durch eine Düse gedrückt wird. Die Einheit für den MFI ist g/10min.

Die erfindungsgemäßen Mischungen bzw. diese Mischungen enthaltende Polyamid-basierten Formmassen und wiederum daraus herzustellende Erzeugnisse enthalten zudem wenigstens ein Copolymerisat D) bestehend aus Wiederholungseinheiten von mindestens einem Olefin, bevorzugt α-Olefin, und mindestens einem Methacrylsäureester oder Acrylsäureester eines aliphatischen Alkohols, wobei der MFI des Copolymerisats D) 150 g/10 min nicht unterschreitet und 600 g/10 min nicht überschreitet. Bevorzugt wird ein Copolymerisat D) eingesetzt, wobei der MFI des Copolymerisats 400 g/10 min nicht unterschreitet und 600 g/ 10 min nicht überschreitet.

In einer bevorzugten Ausführungsform besteht das Copolymerisat D) zu weniger als 4 Gew.-%, besonders bevorzugt zu weniger als 1, Gew.-% und ganz besonders bevorzugt zu 0 Gew.-% aus Monomerbausteinen, wobei letztere weitere reaktive funktionelle Gruppen ausgewählt aus der Gruppe umfassend Epoxide, Oxetane, Anhydride, Imide, Aziridine, Furane, Säuren, Amine, Oxazoline enthalten.

Geeignete Olefine, bevorzugt α-Olefine, als Bestandteil der Copolymerisate D) weisen bevorzugt zwischen 2 und 10 Kohlenstoff-Atomen auf und können unsubstituiert oder mit einer oder mehreren aliphatischen, cycloaliphatischen oder aromatischen Gruppen substituiert sein.

Bevorzugte für das Copolymerisat D) einzusetzende Olefine, insbesondere α-Olefine, werden ausgewählt aus der Gruppe Ethen, Propen, 1-Buten, 1-Penten, 1-Hexen, 1-Octen, 3-Methyl-1-penten. Besonders bevorzugte Olefine sind Ethen und Propen, ganz besonders bevorzugt ist Ethen.

Ebenfalls geeignet sind Mischungen der beschriebenen Olefine.

In einer weiteren bevorzugten Ausführungsform werden die weiteren reaktiven funktionellen Gruppen des Copolymerisats D), ausgewählt aus der Gruppe umfassend Epoxide, Oxetane, Anhydride, Imide, Aziridine, Furane, Säuren, Amine, Oxazoline, ausschließlich über die Olefine in das Copolymer D) eingebracht.

Der Gehalt des Olefins am Copolymerisat D) liegt bevorzugt zwischen 50 und 90 Gew.-%, besonders bevorzugt zwischen 55 und 75 Gew.-%.

Das Copolymerisat D) wird weiterhin definiert durch den zweiten Bestandteil neben dem Olefin.

Als zweiter Bestandteil werden Alkylester oder Arylalkylester der Acrylsäure oder Methacrylsäure eingesetzt, deren Alkyl- oder Arylalkylgruppe aus 1-30 Kohlenstoffatomen gebildet wird.

Bevorzugter zweiter Bestandteil sind Alkylester oder Arylalkylester der Acrylsäure, deren Alkyl- oder Arylalkylgruppe aus 1-30 Kohlenstoffatomen gebildet wird.

Die Alkyl- oder Arylalkylgruppe kann dabei linear oder verzweigt sein sowie cycloaliphatische oder aromatische Gruppen enthalten, daneben auch durch eine oder mehrere Ether- oder Thioetherfunktionen substituiert sein. Geeignete Acrylsäureester in diesem Zusammenhang sind auch solche, die aus einer Alkoholkomponente synthetisiert wurden, die auf Oligoethylenglycol oder Oligopropylenglycol mit nur einer Hydroxylgruppe und maximal 30 C-Atomen basieren.

Bevorzugt wird die Alkylgruppe oder Arylalkylgruppe des Acrylsäureesters ausgewählt aus der Gruppe Methyl, Ethyl, n-Propyl, iso-Propyl, n-Butyl, iso-Butyl, tert-Butyl, sec-Butyl, 1-Pentyl, 1-Hexyl, 2-Hexyl, 3-Hexyl, 1-Heptyl, 3-Heptyl, 1-Octyl, 1-(2-Ethyl)-hexyl, 1-Nonyl, 1-Decyl, 1-Dodecyl, 1-Lauryl oder 1-Octadecyl. Bevorzugt sind Alkylgruppen oder Arylalkylgruppen mit 6-20 Kohlenstoffatomen.

Bevorzugt sind insbesondere auch verzweigte Alkylgruppen, die im Vergleich zu linearen Alkylgruppen gleicher Anzahl an Kohlenstoffatomen zu einer niedrigeren Glasübergangs-Temperatur T_{G} führen.

Aryl steht für eine Atomgruppe, die durch Entfernen eines Wasserstoffatoms von einem aromatischen Kohlenwasserstoff erhalten wird, und umfasst auch solche mit einem kondensierten Ring, und solche mit zwei oder mehreren unabhängigen Benzolringen oder kondensierten Ringen oder zwei oder mehr Ringe, die direkt oder über eine Vinylengruppe miteinander verbunden sind oder dergleichen. Die Arylgruppe weist vorzugsweise eine Kohlenstoffatomzahl von in der Regel 6 bis 60, bevorzugt 6 bis 48 auf und kann gegebenenfalls wenigstens einen Substituenten aufweisen.

Erfindungsgemäß besonders bevorzugt sind Copolymeriate D), bei denen das Olefin mit Acrylsäure-C₆-C₁₀-alkylester copolymerisiert wird.

Erfindungsgemäß insbesondere bevorzugt sind Copolymerisate, bei denen des Olefin mit Acrylsäure-(2-ethyl)-hexylester copolymerisiert wird. Ebenfalls geeignet sind Mischungen der beschriebenen Acrylsäureester.

Bevorzugt ist hierbei die Verwendung von mehr als 60 Gew.-%, besonders bevorzugt mehr als 90 Gew.-% und ganz besonders bevorzugt die Verwendung von 100 Gew.-% Acrylsäure-(2-ethyl)-hexylester bezogen auf die Gesamtmenge an Acrylsäureester im Copolymerisat D).

In einer weiteren bevorzugten Ausführungsform werden die weiteren reaktiven funktionellen Gruppen ausgewählt aus der Gruppe Epoxide, Oxetane, Anhydride, Imide, Aziridine, Furane, Säuren, Amine, Oxazoline des Copolymerisates D) ausschließlich über den bzw. die Acrylsäureester in das Copolymerisat D) eingebracht.

Der Gehalt der Acrylsäureester am Copolymerisat D) liegt zwischen 10 und 50 Gew.-%, bevorzugt zwischen 25 und 45 Gew.-%.

Insbesondere ganz besonders bevorzugt wird als Komponente D) ein Copolymerisat basierend auf Ethen und Acrylsäure-(2-ethyl)-hexylester eingesetzt.

In einer bevorzugten Ausführungsform der vorliegenden Erfindung enthalten die erfindungsgemäßen Mischungen bzw. die erfindungsgemäßen Mischungen enthaltenden Polyamid-basierten Formmassen und daraus herzustellende Erzeugnisse neben den Komponenten A), B), C) und D) noch zusätzlich 0,01 bis 5 Gew.-% sonstiger Additive E) wobei die Mengen von einer oder mehrerer der Komponenten A), B), C) und D) so reduziert werden, dass die Summe aller Gewichtsprozente stets 100 ergibt. Die Additive E) können alleine oder in Mischung bzw. in Form von Masterbatchen eingesetzt werden.

Additive E) im Sinne der vorliegenden Erfindung sind Thermo-Stabilisatoren (Plastics Additives Handbook, 5th Edition, Hanser-Verlag, München, 2001, Seiten 80-84), UV-Stabilisatoren (Plastics Additives Handbook, 5th Edition, Hanser-Verlag, München, 2001, Seiten 352-363), Nukleierungsmittel (Plastics Additives Handbook, 5th Edition, Hanser-Verlag, München, 2001, Seiten 949-959, 966; Plastics Additives Handbook, 5th Edition, Hanser-Verlag, München, 2001, Seiten 85-88), Gleit- und Entformungsmittel (Plastics Additives Handbook, 5th Edition, Hanser-Verlag, München, 2001, Seiten 511-541, 546-548) sowie Farbstoffe und Pigmente (Plastics Additives Handbook, 5th Edition, Hanser-Verlag, München, 2001, Seiten 813-818, 823, 872-874).

Als Thermo-Stabilisatoren werden bevorzugt Kupfer(I)halogenide, bevorzugt Kupfer(I)-chloride, Kupfer(I)bromide, Kupfer(I)jodide in Verbindung mit Halogeniden von Alkalimetallen, bevorzugt Natrium-, Kalium und/oder Lithium-halogenide eingesetzt, wobei Halogenide wiederum bevorzugt für Chlorid, Bromid oder Jodid steht. (Kunststoff-Handbuch 3/4, Polyamide, Carl Hanser Verlag, München 1998, Seite 78).

Weiterhin werden bevorzugt sterisch gehinderte Phenole (Kunststoff-Handbuch 3/4, Polyamide, Carl Hanser Verlag, München 1998, Seite 79), Hydrochinone, Phosphite (Kunststoff-Handbuch 3/4, Polyamide, Carl Hanser Verlag, München 1998, Seiten 79, 82), aromatische sekundäre Amine, insbesondere Diphenylamine (Kunststoff-Handbuch 3/4, Polyamide, Carl Hanser Verlag, München 1998, Seite 79), substituierte Resorcine, Salicylate, Benzotriazole oder Benzophenone, sowie verschieden substituierte Vertreter dieser Gruppen oder deren Mischungen eingesetzt.

Als Nukleierungsmittel werden bevorzugt Natrium- oder Calciumphenylphosphinat, Aluminiumoxid, Siliziumdioxid sowie besonders bevorzugt Talkum eingesetzt.

Als Gleit- und Entformungsmittel werden bevorzugt Esterwachse, Pentaerytritoltetrastearat (PETS), langkettige Fettsäuren, besonders bevorzugt Stearinsäure oder Behensäure und Ester, deren Salze, insbesondere bevorzugt Ca- oder Zn-Stearat, sowie Amidderivate, bevorzugt Ethylen-bis-stearylamid oder Montanwachse, bevorzugt Mischungen aus geradkettigen, gesättigten Carbonsäuren mit Kettenlängen von 28 bis 32 C-Atomen sowie niedermolekulare Polyethylen- bzw. Polypropylenwachse eingesetzt.

Bevorzugte Farbstoffe und Pigmente sind Ruß (Plastics Additives Handbook, 5th Edition, Hanser-Verlag, München, 2001, Seiten 823, 924-925; Elektrisch leitende Kunststoffe, Carl Hanser Verlag, München 1989, 2. Auflage, Seite 21-23) und Nigrosin-Farbstoffe. Nigrosin-Farbstoffe sind Phenazin-Farbstoffe mit polyzyklischer, aromatischer Struktur, die durch Reaktion von Nitrobenzol und Anilin hergestellt werden. Bevorzugte Nigrosin-Farbstoffe sind Solvent Black 7 (CAS 8005-02-5), Solvent Black 5 (CAS No.11099-03-9) und Acid Black (CAS 8005-03-6).

Die erfindungsgemäßen Polyamid-basierten Formmassen werden durch bekannte Verfahren zu den gewünschten Erzeugnissen, bevorzugt zu Bauteilen, Formkörpern, Formteilen oder Halbzeugen, verarbeitet, bevorzugt durch Spritzgießen.

Spritzgießverfahren thermoplastischer Polymere zur Herstellung von Erzeugnissen, bevorzugt von Bauteilen, Formteilen, Formkörpern oder Halbzeugen, arbeiten bei Schmelzetemperaturen im Bereich von 220 bis 330°C, bevorzugt von 230 bis 300°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar.

Die vorliegende Erfindung betrifft deshalb auch ein Verfahren zur Herstellung von Erzeugnissen, bevorzugt Bauteilen, Formkörpern, Formteilen oder Halbzeugen, dadurch gekennzeichnet, dass man Mischungen, enthaltend
A) 28 bis 84,5 Gew.-%, bevorzugt 36 bis 81,5 Gew.-%, wenigstens eines Polyamids,
B) 10 bis 50 Gew.-%, bevorzugt 10 bis 45 Gew.-%, besonders bevorzugt 15 bis 40 Gew.-% wenigstens einer Form von Glasfasern,
C) 5 bis 17 Gew.-%, bevorzugt 8 bis 15 Gew.-%, wenigstens eines mit Maleinsäureanhydrid gepfropften Ethylen-Butylen-Copolymers, und
D) 0,5 bis 5 Gew.-%, bevorzugt 0,5 bis 4 Gew.-%, wenigstens eines Copolymerisats bestehend aus Wiederholungseinheiten von mindestens einem Olefin, bevorzugt α-Olefin, und mindestens einem Methacrylsäureester oder Acrylsäureester eines aliphatischen Alkohols, wobei der MFI (Melt Flow Index) des Copolymerisats D) 150 g/10 min nicht unterschreitet und 600 g/10 min nicht überschreitet und der MFI bei 190 °C und einer Belastung von 2,16 kg bestimmt bzw. gemessen wird, wobei die Summe aller Gewichtsprozente stets 100 ergibt,
in Form von Polyamid-Formmassen durch Spritzgießen bei Schmelzetemperaturen im Bereich von 220 bis 330°C sowie gegebenenfalls zusätzlich bei Drücken von maximal 2500 bar verarbeitet, wobei die Mischungen bevorzugt 95 bis 100 Gew.-% der Polyamid-Formmassen ausmachen.

Die vorliegende Erfindung betrifft deshalb auch die Verwendung von Mischungen enthaltend
A) 28 bis 84,5 Gew.-%, bevorzugt 36 bis 81,5 Gew.-%, wenigstens eines Polyamids,
B) 10 bis 50 Gew.-%, bevorzugt 10 bis 45 Gew.-%, besonders bevorzugt 15 bis 40 Gew.-% wenigstens einer Form von Glasfasern,
C) 5 bis 17 Gew.-%, bevorzugt 8 bis 15 Gew.-%, wenigstens eines mit Maleinsäureanhydrid gepfropften Ethylen-Butylen-Copolymers, und
D) 0,5 bis 5 Gew.-%, bevorzugt 0,5 bis 4 Gew.-%, wenigstens eines Copolymerisats bestehend aus Wiederholungseinheiten von mindestens einem Olefin, bevorzugt α-Olefin, und mindestens einem Methacrylsäureester oder Acrylsäureester eines aliphatischen Alkohols, wobei der MFI (Melt Flow Index) des Copolymerisats D) 150 g/10 min nicht unterschreitet und 600 g/10 min nicht überschreitet und der MFI bei 190 °C und einer Belastung von 2,16 kg bestimmt bzw. gemessen wird, wobei die Summe aller Gewichtsprozente stets 100 ergibt,
in Polyamid-Formmassen zur Herstellung von Erzeugnissen mit hoher Schlagzähigkeit und hoher Bruchdehnung. mittels Spritzguss.

Durch das erfindungsgemäße Verfahren unter Einsatz der erfindungsgemäßen Mischungen erzielt man den überraschenden und für den fachmann aus dem Stand der Technik nicht vorhersehbaren Effekt, dass die Erzeugnisse, bevorzugt Bauteile, Formkörper, Formteile oder Halbzeuge, eine hohe Schlagzähigkeit und Bruchdehnung aufweisen.

Das Verfahren des Spritzgießens wird üblicherweise durchgeführt, indem der Rohstoff, also die einzusetzende erfindungsgemäße Formmasse, bevorzugt in Granulatform, in einem beheizten zylindrischen Hohlraum aufgeschmolzen (plastifiziert) und als Spritzmasse unter Druck in einen temperierten Hohlraum gespritzt wird. Nach dem Abkühlen (Erstarren) der Masse wird das Spritzgussteil entformt.

Man unterscheidet im Spritzgießprozess die Teilschritte:
1. Plastifizieren / Aufschmelzen
2. Einspritzphase (Füllvorgang)
3. Nachdruckphase (wegen thermischer Kontraktion bei der Kristallisation)
4. Entformen.

Eine zu diesem Zweck einzusetzende Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.
Im Spritzgießwerkzeug wird dann die einströmende Schmelze gelöst, gekühlt und somit das zu fertigende Bauteil bzw. das Erzeugnis oder der Formkörper gefertigt. Notwendig dazu sind immer zwei Werkzeughälften. Beim Spritzguss unterscheidet man folgende Funktionskomplexe:
- Angusssystem
- Formbildende Einsätze
- Entlüftung
- Maschinen- und Kraftaufnahme
- Entformungssystem und Bewegungsübertragung
- Temperierung.

Zum Spritzgießen von Polyamiden siehe auch Kunststoff-Handbuch 3/4, Polyamide, Carl Hanser Verlag, München 1998, Seiten 315-352.

Die vorliegende Erfindung betrifft aber auch die Verwendung der Kombination wenigstens eines mit Maleinsäureanhydrid gepfropften Ethylen-Butylen-Copolymers und wenigstens eines Copolymerisats bestehend aus mindestens einem Olefin, bevorzugt α-Olefin und mindestens einem Methacrylsäureester oder Acrylsäureester eines aliphatischen Alkohols, wobei der MFI (Melt Flow Index) des Copolymerisats 150 g/10 min nicht unterschreitet und 600 g/10 min nicht überschreitet und der MFI bei 190 °C und einer Belastung von 2,16 kg bestimmt bzw. gemessen wird zur Herstellung von Erzeugnissen auf Basis von Polyamid mit hoher Schlagzähigkeit und hoher Bruchdehnung.

Die vorliegende Erfindung betrifft bevorzugt die Verwendung der Kombination wenigstens eines mit Maleinsäureanhydrid gepfropften Ethylen-Butylen-Copolymers und wenigstens eines Copolymerisats bestehend aus mindestens einem Olefin, bevorzugt α-Olefin und mindestens einem Methacrylsäureester oder Acrylsäureester eines aliphatischen Alkohols, wobei der MFI (Melt Flow Index) des Copolymerisats 150 g/10 min nicht unterschreitet und 600 g/10 min nicht überschreitet und der MFI bei 190 °C und einer Belastung von 2,16 kg bestimmt bzw. gemessen wird zur Herstellung von Erzeugnissen auf Basis von glasfaserverstärktem Polyamid mit hoher Schlagzähigkeit und hoher Bruchdehnung.

Die vorliegende Erfindung betrifft auch Erzeugnisse, bevorzugt Formkörper, Formteile, Bauteile oder Halbzeuge, erhältlich durch Einsatz der erfindungsgemäßen Mischungen in Polyamid-basierten Formmassen im Spritzguß.

Die erfindungsgemäß herzustellenden Erzeugnisse, bevorzugt Formkörper, Formteile, Bauteile oder Halbzeuge werden bevorzugt in der Fahrzeugindustrie, besonders bevorzugt in der Kraftfahrzeugindustrie, insbesondere als Airbag-Gehäuse von Kraftfahrzeugen eingesetzt.

### Beispiele

Zum Nachweis der erfindungemäß beschriebenen Verbesserungen wurden zunächst durch Compoundierung entsprechender die erfindungsgemäßen Mischungen enthaltende Polyamid-basierte Formmassen angefertigt. Die einzelnen Komponenten wurden in einem Zweiwellenextruder (ZSK 26 Mega Compounder der Fa. Coperion Werner & Pfleiderer, Stuttgart, Deutschland) bei Temperaturen zwischen 260 und 300°C gemischt, als Strang in ein Wasserbad ausgetragen, bis zur Granulierfähigkeit abgekühlt und granuliert.

Der Spritzguss von Prüfkörpern 80 mm 10 mm · 4 mm und 170 mm · 10 mm 4 mm der erfindungsgemäßen Polyamid-basierten Formasse der Beispiele 1 und 2 und der Formmassen der Vergleichsbeispiele 1, 2 und 3 erfolgte auf einer Spritzgießmaschine des Typs ARBURG-520 C 200 - 350 bei einer Massetemperatur von 290 °C und einer Werkzeugtemperatur von 80 °C.

Die Ermittlung der Schlagzähigkeit gemäß Charpy ISO179 1eU erfolgte an spritzgegossenen Probekörpern 80 mm 10 mm · 4 mm in spritzfrischem Zustand bei 23 °C.

Die Ermittlung der Bruchdehnung gemäß ISO527 erfolgte an spritzgegossenen Probekörpern 170 mm 10 mm 4 mm im spritzfrischen Zustand bei 23 °C.

**Tabelle 1: Ausführungsbeispiele In der folgenden Tabelle sind die Mengen der Einsatzstoffe in Gew.-% und die erfindungsgemäßen Effekte angegeben.**

| | | **Beispiel 1** | **Beispiel 2** | **Vergleich 1** | **Vergleich 2** | **Vergleich 3** |
|---|---|---|---|---|---|---|
| Polyamid ¹⁾ | [%] | 48,735 | 47,735 | 49,735 | 49,735 | 48,735 |
| Glasfaser ²⁾ | [%] | 40 | 40 | 40 | 40 | 40 |
| Ethylen-Butylen-Copolymer ³⁾ | [%] | 10 | 10 | 10 | 0 | 0 |
| Copolymerisat ⁴⁾ | [%] | 1 | 2 | 0 | 0 | 1 |
| Ethylen-Propylen-Copolymer ⁵⁾ | [%] | 0 | 0 | 0 | 10 | 10 |
| Additive ⁶⁾ | [%] | 0,265 | 0,265 | 0,265 | 0,265 | 0,265 |
| Schlagzähigkeit Charpy ISO179 1eU bei 23 °C ⁷⁾ | [kJ/m²] | 119 | 123 | 113 | 97 | |
| Bruchdehnung bei 23 °C ⁸⁾ | [%] | 7,4 | 7,8 | 6,9 | 4,7 | |

| | | | | | | |
|---|---|---|---|---|---|---|
| 1) Copolyamid PA 6/66 (polymerisiert aus 95 Gew.-% ε-Caprolactam und 5 Gew.-% Hexamethylendiaminadipat) mit einer Viskositätszahl VN gemäß DIN EN ISO 307 in Schwefelsäure von 146 2) Mit silanhaltigen Verbindungen beschichtete E-Glasfaser mit einem Filament-Durchmesser von 10 µm 3) Ethylen-Butylen-Copolymer enthaltend 0,7 Gew.-% gepfropftes Maleinsäureanhydrid, einer Dichte von 0,87 g/cm³ und einem MVI von 5 cm³/10 min bei 190 °C und einer Belastung von 2,16. 4) Copolymerisat aus Ethylen und Acrylsäure-2-ethylhexylester mit einem EthylenAnteil von 63 Gewichts-% und einem MFI von 550 g/10 min bei 190 °C und einer Belastung von 2,16 kg 5) Ethylen-Propylen-Copolymer enthaltend 0,7 Gew.-% gepfropftes Maleisäureanhydrid (MVI: 5 cm³/10 min (190 °C / 2,16 kg / 5 min), Dichte 0,87 g/cm³). 6) Talkum, Cul/KBr-Gemisch (Molverhältnis 1 : 4,5), Montanwachs 7) gemessen an Probekörpern 80 mm * 10 mm * 4 mm in spritzfrischem Zustand bei 23 °C 8) gemessen an Probekörpern 170 mm * 10 mm * 4 mm in spritzfrischem Zustand bei 23 °C | | | | | | |

Die Formassen der erfindungsgemäßen Beispiele 1 und 2 zeigen eine höhere Schlagzähigkeit gemäß Charpy ISO179 1eU an Probekörpern 80 mm 10 mm 4 mm im spritzfrischen Zustand bei 23 °C und eine höhere Bruchdehnung gemäß ISO527 an Probekörpern 170 mm 10 mm 4 mm in spritzfrischem Zustand bei 23 °C als Vergleichsbeispiele 1, 2 und 3.

## Patentansprüche

1. Mischungen, enthaltend
A) 28 bis 84,5 Gew-% wenigstens eines Polyamids,
B) 10 bis 50 Gew.-% wenigstens einer Form von Glasfasern,
C) 5 bis 17 Gew-% wenigstens eines mit Maleinsäureanhydrid gepfropften Ethylen-Butylen-Copolymers, und
D) 0,5 bis 5 Ges.-% wenigstens eines Copolymerisats bestehend aus Wiederholungseinheiten von mindestens einem Olefin und mindestens einem Methacrylsäureester oder Acrylsäureester eines aliphatischen Alkohols, wobei der MFI (Melt Flow Index) des Copolymerisats D) 150 g/10 min nicht unterschreitet und 600 g/10 min nicht überschreitet und der MFI bei 190 °C und einer Belastung von 2,16 kg bestimmt bzw. gemessen wird, wobei die Summe aller Gewichtsprozente in den Mischungen stets 100 ergibt.

2. Mischungen gemäß Anspruch 1, die neben den Komponenten A), B), C) und D) noch zusätzlich E) 0,01-5 Gew.-% wenigstens eines sonstigen Additivs enthalten. wobei die Mengen von einer oder mehrerer der Komponenten A), B), C) und D) so reduziert werden, dass die Summe aller Gewichtsprozente in den Mischungen stets 100 ergibt.

3. Mischungen gemäß einem der Ansprüche 1 oder 2, **dadurch gekennzeichnet, dass** die Glasfaser mit einem geeigneten Schlichtesystem als Haftvermittler ausgerüstet ist.

4. Mischungen gemäß Anspruch 3, **dadurch gekennzeichnet, dass** als Schlichtesystem auf Silanbasis Verbindungen der allgemeinen Formel (I)
(X-(CH₂)_{q})ₖ-Si-(O-CᵣH₂ᵣ₊₁)₄₋ₖ (I)
worin
X für NH₂-, HO- oder 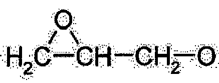 steht,
q für eine ganze Zahl von 2 bis 10, bevorzugt 3 bis 4 steht,
r für eine ganze Zahl von 1 bis 5, bevorzugt 1 bis 2 steht und
k für eine ganze Zahl von 1 bis 3, bevorzugt 1 steht, eingesetzt werden.

5. Mischungen gemäß einem der Ansprüche 3 oder 4, **dadurch gekennzeichnet, dass** ein Schlichtesystem als Haftvermittler aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten, eingesetzt werden.

6. Mischungen gemäß einem der Ansprüche 1 bis 5, **dadurch gekennzeichnet, dass** das Polyamid A) polymerisiert aus ε-Caprolactam und Hexamethylendiaminadipat, zu mindestens 90 Gew.% aus ε-Caprolactam besteht.

7. Mischungen gemäß einem der Ansprüche 1 bis 6, **dadurch gekennzeichnet, dass** das mit Maleinsäureanhydrid gepfropfte Ethylen-Butylen-Copolymer einen Maleinsäureanhydrid-Gehalt von 0,1 bis 10 Gew.-% bezogen auf das Copolymer aufweist und die Wiederholungseinheiten basierend auf den Monomeren Ethylen und Butylen in einem Verhältnis der Gew.% von 4:6 bis 3:7 im funktionalisierten Copolymer vorliegen.

8. Mischungen gemäß einem der Ansprüche 1 bis 7, **dadurch gekennzeichnet, dass** das Copolymerisat D) bestehend aus Wiederholungseinheiten von mindestens einem Olefin und mindestens einem Methacrylsäureester oder Acrylsäureester eines aliphatischen Alkohols, wobei der MFI (Schmelzindex) des Copolymerisats D) 400 g/10 min nicht unterschreitet und 600 g/10 min nicht überschreitet und der MFI bei 190 °C und einer Belastung von 2,16 kg bestimmt bzw. gemessen wird.

9. Mischungen gemäß Anspruch 8, **dadurch gekennzeichnet, dass** ein Olefin aus der Gruppe Ethen, Propen, 1-Buten, 1-Penten, 1-Hexen, 1-Octen, 3-Methyl-1-penten ausgewählt wird, bevorzugt aus Ethen und Propen ausgewählt wird und ganz besonders bevorzugt Ethen ausgewählt wird.

10. Mischungen gemäß Anspruch 9, dadurch gekenntzeichnet, dass das Olefin mit Acrylsäure-(2-ethyl)-hexylester copolymerisiert wird.

11. Mischungen gemäß einem der Ansprüche 1 bis 10, **dadurch gekennzeichnet, dass** ein Copolymerisat basierend auf Ethen und Acrylsäure-(2-ethyl)-hexylester eingesetzt wird.

12. Polyamid-Formmassen, **dadurch gekennzeichnet, dass** die Ansprüche 1 bis 11 95 bis 100 Gew.-% darin ausmachen.

13. Verwendung von Mischungen enthaltend
A) 28 bis 84,5 Gew-% wenigstens eines Polyamids,
B) 10 bis 50 Gew.-% wenigstens einer Form von Glasfasern,
C) 5 bis 17 Gew-% wenigstens eines mit Maleinsäureanhydrid gepfropften Ethylen-Butylen-Copolymers, und
D) 0,5 bis 5 Gew.-% wenigstens eines Copolymerisats bestehend aus Wiederholungseinheiten von mindestens einem Olefin und mindestens einem Methacrylsäureester oder Acrylsäureester eines aliphatischen Alkohols, wobei der MFI (Melt Flow Index) des Copolymerisats D) 150 g/10 min nicht unterschreitet und 600 g/10 min nicht überschreitet und der MFI bei 190 °C und einer Belastung von 2,16 kg bestimmt bzw. gemessen wird, Wobei die Summe aller Gewichtsprozente in den Mischungen stets 100 ergibt, in Polyamid-Formmassen zur Herstellung von Erzeugnissen mit hoher Schlagzähigkeit und hoher Bruchdehnung mittels Spritzguss.

14. Verwendung gemäß Anspruch 13, **dadurch gekennzeichnet, dass** es sich bei den Erzeugnissen um Formkörper, Formteile, Bauteile oder um Halbzeuge für die Fahrzeugindustrie handelt.

15. Erzeugnisse erhältlich durch Spritzguss von Polyamid-basierten-Formmassen enthaltend Mischungen gemäß einem der Ansprüche 1 bis 11.

16. Verfahren zur Herstellung von Erzeugnissen, **dadurch gekennzeichnet, dass** man. Mischungen, enthaltend
A) 28 bis 84,5 Gew.-% wenigstens eines Polyamids,
B) 10 bis 50 Gew.-% wenigstens einer Form von Glasfasern,
C) 5 bis 17 Gew.-%, wenigstens eines mit Maleinsäureanhydrid gepfropften Ethylen-Butylen-Copolymers, und
D) 0,5 bis 5 Gew.-%, wenigstens eines Copolymerisats bestehend aus Wiederholungseinheiten von mindestens einem Olefin und mindestens einem Methacrylsäureester oder Acrylsäureester eines aliphatischen Alkohols, wobei der MFI (Melt Flow Index) des Copolymerisats D) 150 g/10 min nicht unterschreitet und 600 g/10 min nicht überschreitet und der MFI bei 190 °C und einer Belastung von 2,16 kg bestimmt bzw. gemessen wird, wobei die Summe aller Gewichtsprozente in den Mischungen stets 100 ergibt,
in Form von Polyamid-Formmassen durch Spritzgießen bei Schmelzetemperaturen im Bereich von 220 bis 330°C sowie gegebenenfalls zusätzlich bei Drücken von maximal 2500 bar verarbeitet, wobei die Mischungen 95 bis 100 Gew.-% der Polyamid-Formmassen ausmachen.

## Claims

1. Mixtures comprising
A) from 28 to 84.5% by weight of at least one polyamide,
B) from 10 to 50% by weight of at least one type of glass fibres,
C) from 5 to 17% by weight of at least one ethylene-butylene copolymer grafted with maleic anhydride, and
D) from 0.5 to 5% by weight of at least one copolymer composed of repeating units of at least one olefin and at least one methacrylate or acrylate of an aliphatic alcohol, where the MFI (Melt Flow Index) of the copolymer D) is not less than 150 g/10 min and does not exceed 600 g/10 min, and the MFI is determined or measured at 190°C and with a load of 2.16 kg, where the sum of all the percentages by weight in the mixtures is always 100.

2. Mixtures according to Claim 1 which also comprise, alongside components A), B), C) and D), E) from 0.01 to 5% by weight of at least one other additive, where the quantities of one or more of components A), B), C) and D) are reduced in such a way that the sum of all the percentages by weight in the mixtures is always 100.

3. Mixtures according to Claim 1 or 2, **characterized in that** the glass fibre has been equipped with a suitable size system as coupling agent.

4. Mixtures according to Claim 3, **characterized in that** compounds of the general formula (I)
(X-(CH₂)_{q})ₖ-Si(O-CᵣH₂ᵣ₊₁)₄₋ₖ (I)
in which
X is NH₂-, HO or 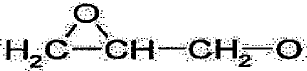
q is an integer from 2 to 10, preferably from 3 to 4,
r is an integer from 1 to 5, preferably from 1 to 2 and
k is an integer from 1 to 3, preferably 1
are used as silane-based size system.

5. Mixtures according to Claim 3 or 4, **characterized in that** coupling agent used comprises a size system from the group of aminopropyltrimethoxysilane, aminobutyltrimethoxysilane, aminopropyltriethoxysilane, aminobutyltriethoxysilane, and the corresponding silanes which comprise a glycidyl group as substituent X.

6. Mixtures according to any of Claims 1 to 5, **characterized in that** the polyamide A) polymerized from ε-caprolactam and hexamethylenediamine adipate is composed of at least 90% by weight of ε-caprolactam.

7. Mixtures according to any of Claims 1 to 6, **characterized in that** the ethylene-butylene copolymer grafted with maleic anhydride has from 0.1 to 10% by weight maleic anhydride content, based on the copolymer and the repeating units based on the monomers ethylene and butylene are present in a % by weight ratio of 4:6 to 3:7 in the functionalized copolymer.

8. Mixtures according to one of Claims 1 to 7, **characterized in that** the copolymer D) is composed of repeating units of at least one olefin and at least one methacrylate or acrylate or an aliphatic alcohol where the MFI (Melt Index) of the copolymer D) is not less than 400 g/10 min and does not exceed 600 g/10 min, and the MFI is determined or measured at 190°C and with a load of 2.16 kg.

9. Mixtures according to Claim 8, **characterized in that** an olefin is selected from the group of ethene, propene, 1-butene, 1-pentene, 1-hexene, 1-octene, and 3-methyl-1-pentene, preferably from ethene and propene, and ethene is very particularly preferably selected.

10. Mixtures according to Claim 9, **characterized in that** the olefin is copolymerized with 2-ethylhexyl acrylate.

11. Mixtures according to any of Claims 1 to 10, **characterized in that** a copolymer based on ethene and 2-ethylhexyl acrylate is used.

12. Polyamide moulding compositions, **characterized in that** Claims 1 to 11 constitute from 95 to 100% by weight thereof.

13. Use of mixtures comprising
A) from 28 to 84.5% by weight of at least one polyamide,
B) from 10 to 50% by weight of at least one type of glass fibres,
C) from 5 to 17% by weight of at least one ethylene-butylene copolymer grafted with maleic anhydride, and
D) from 0.5 to 5% by weight of at least one copolymer composed of repeating units of at least one olefin and at least one methacrylate or acrylate of an aliphatic alcohol, where the MFI (Melt Flow Index) of the copolymer D) is not less than 150 g/10 min and does not exceed 600 g/10 min, and the MFI is determined or measured at 190°C and with a load of 2.16 kg, where the sum of all the percentages by weight in the mixtures is always 100, in polyamide moulding compositions for the production of products with high impact resistance and high tensile strain at break by means of injection moulding.

14. Use according to Claim 13, **characterized in that** the products are mouldings or components, or are semifinished products for the vehicle industry.

15. Products obtainable via injection moulding of polyamide-based moulding compositions comprising mixtures according to any of Claims 1 to 11.

16. Process for the production of products, **characterized in that** mixtures comprising
A) from 28 to 84.5% by weight of at least one polyamide,
B) from 10 to 50% by weight of at least one type of glass fibres,
C) from 5 to 17% by weight of at least one ethylene-butylene copolymer grafted with maleic anhydride, and
D) from 0.5 to 5% by weight of at least one copolymer composed of repeating units of at least one olefin and at least one methacrylate or acrylate of an aliphatic alcohol, where the MFI (Melt Flow Index) of the copolymer D) is not less than 150 g/10 min and does not exceed 600 g/10 min, and the MFI is determined or measured at 190°C and with a load of 2.16 kg, where the sum of all the percentages by weight in the mixtures is always 100,
in the form of polyamide moulding compositions are processed via injection moulding at melt temperatures in the range from 220 to 330°C, and also optionally at pressures at most 2500 bar, where the mixtures constitute from 95 to 100% by weight of the polyamide moulding compositions.

## Revendications

1. Mélanges, contenant
A) 28 à 84,5 % en poids d'au moins un polyamide,
B) 10 à 50 % en poids d'au moins une forme de fibres de verre,
C) 5 à 17 % en poids d'au moins un copolymère d'éthylène-butylène greffé avec de l'anhydride de l'acide maléique, et
D) 0,5 à 5 % en poids d'au moins un copolymère constitué par des unités de répétition d'au moins une oléfine et d'au moins un ester de l'acide méthacrylique ou d'un ester de l'acide acrylique d'un alcool aliphatique, le MFI (Melt Flow Index) du copolymère D) n'étant pas inférieur à 150 g/10 min et n'étant pas supérieur à 600 g/10 min, et le MFI étant déterminé ou mesuré à 190 °C et sous une charge de 2,16 kg, la somme de tous les pourcentages en poids dans les mélanges étant toujours de 100.

2. Mélanges selon la revendication 1, qui contiennent en plus des composants A), B), C) et D) également E) 0,01 à 5 % en poids d'au moins un autre additif, les quantités d'un ou de plusieurs des composants A), B), C) et D) étant réduites pour que la somme de tous les pourcentages en poids dans les mélanges soit toujours de 100.

3. Mélanges selon l'une quelconque des revendications 1 ou 2, **caractérisés en ce que** les fibres de verre sont équipées d'un système d'encollage approprié en tant que promoteur d'adhésion.

4. Mélanges selon la revendication 3, **caractérisés en ce qu'**en tant que système d'encollage à base de silane, des composés de formule générale (I)
(X-(CH₂)_{q})ₖ-Si-(O-CᵣH₂ᵣ₊₁)₄₋ₖ (I)
dans laquelle
X représente NH₂-, HO- ou 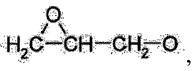
q représente un nombre entier de 2 à 10, de préférence 3 à 4,
r représente un nombre entier de 1 à 5, de préférence 1 à 2, et
k représente un nombre entier de 1 à 3, de préférence 1,
sont utilisés.

5. Mélanges selon l'une quelconque des revendications 3 ou 4, **caractérisés en ce qu'**un système d'encollage est utilisé en tant que promoteur d'adhésion du groupe constitué par l'aminopropyltriméthoxysilane, l'aminobutyltriméthxysilane, l'aminopropyltriéthoxysilane, l'aminobutyltriéthoxysilane, ainsi que les silanes correspondants qui contiennent en tant que substituant X un groupe glycidyle.

6. Mélanges selon l'une quelconque des revendications 1 à 5, **caractérisés en ce que** le polyamide A) polymérisé à partir d'ε-caprolactame et d'adipate d'hexaméthylène-diamine est constitué d'au moins 90 % en poids d'ε-caprolactame.

7. Mélanges selon l'une quelconque des revendications 1 à 6, **caractérisés en ce que** le copolymère d'éthylène-butylène greffé avec de l'anhydride de l'acide maléique présente une teneur en anhydride de l'acide maléique de 0,1 à 10 % en poids, par rapport au copolymère, et les unités de répétition à base des monomères éthylène et butylène se présentent en un rapport des % en poids de 4:6 à 3:7 dans le copolymère fonctionnalisé.

8. Mélanges selon l'une quelconque des revendications 1 à 7, **caractérisés en ce que** le copolymère D) est constitué d'unités de répétition d'au moins une oléfine et d'au moins un ester de l'acide méthacrylique ou d'un ester de l'acide acrylique d'un alcool aliphatique, le MFI (indice de fusion) du copolymère D) n'étant pas inférieur à 400 g/10 min et n'étant pas supérieur à 600 g/10 min, et le MFI étant déterminé ou mesuré à 190 °C et sous une charge de 2,16 kg.

9. Mélanges selon la revendication 8, **caractérisés en ce qu'**une oléfine du groupe constitué par l'éthène, le propène, le 1-butène, le 1-pentène, le 1-hexène, le 1-octène, le 3-méthyl-1-pentène est choisie, de préférence choisie parmi l'éthène et le propène, et de manière tout particulièrement préférée l'éthène.

10. Mélanges selon la revendication 9, **caractérisés en ce que** l'oléfine est copolymérisée avec de l'ester (2-éthyl)-hexylique de l'acide acrylique.

11. Mélanges selon l'une quelconque des revendications 1 à 10, **caractérisés en ce qu'**un copolymère à base d'éthène et d'ester (2-éthyl)-hexylique de l'acide acrylique est utilisé.

12. Matériaux de moulage polyamide, **caractérisés en ce que** les mélanges selon les revendications 1 à 11 en représentent 95 à 100 % en poids.

13. Utilisation de mélanges contenant
A) 28 à 84,5 % en poids d'au moins un polyamide,
B) 10 à 50 % en poids d'au moins une forme de fibres de verre,
C) 5 à 17 % en poids d'au moins un copolymère d'éthylène-butylène greffé avec de l'anhydride de l'acide maléique, et
D) 0,5 à 5 % en poids d'au moins un copolymère constitué par des unités de répétition d'au moins une oléfine et d'au moins un ester de l'acide méthacrylique ou d'un ester de l'acide acrylique d'un alcool aliphatique, le MFI (Melt Flow Index) du copolymère D) n'étant pas inférieur à 150 g/10 min et n'étant pas supérieur à 600 g/10 min, et le MFI étant déterminé ou mesuré à 190 °C et sous une charge de 2,16 kg, la somme de tous les pourcentages en poids dans les mélanges étant toujours de 100, dans des matériaux de moulage polyamide pour la fabrication d'articles présentant une résistance aux impacts élevée et un allongement à la rupture élevé par moulage par injection.

14. Utilisation selon la revendication 13, **caractérisée en ce que** les articles sont des corps moulés, des pièces moulées, des composants ou des produits semi-finis pour l'industrie automobile.

15. Articles, pouvant être obtenus par moulage par injection de matériaux de moulage à base de polyamide contenant des mélanges selon l'une quelconque des revendications 1 à 11.

16. Procédé de fabrication d'articles, **caractérisé en ce que** des mélanges contenant
A) 28 à 84,5 % en poids d'au moins un polyamide,
B) 10 à 50 % en poids d'au moins une forme de fibres de verre,
C) 5 à 17 % en poids d'au moins un copolymère d'éthylène-butylène greffé avec de l'anhydride de l'acide maléique, et
D) 0,5 à 5 % en poids d'au moins un copolymère constitué par des unités de répétition d'au moins une oléfine et d'au moins un ester de l'acide méthacrylique ou d'un ester de l'acide acrylique d'un alcool aliphatique, le MFI (Melt Flow Index) du copolymère D) n'étant pas inférieur à 150 g/10 min et n'étant pas supérieur à 600 g/10 min, et le MFI étant déterminé ou mesuré à 190 °C et sous une charge de 2,16 kg, la somme de tous les pourcentages en poids dans les mélanges étant toujours de 100,
sont usinés sous la forme de matériaux de moulage polyamide par moulage par injection à des températures de la masse fondue dans la plage allant de 220 à 330 °C, ainsi qu'éventuellement également à des pression d'au plus 2 500 bar, les mélanges représentant 95 à 100 % en poids des matériaux de moulage polyamide.
